# EUROPÄISCHE PATENTANMELDUNG

(11) **EP 4 062 810 A1**
(43) Veröffentlichungstag der Anmeldung: **28.09.2022**
(21) Anmeldenummer: 22160400.2
(22) Anmeldetag: 07.03.2022
(51) Int. Cl.: A47J 31/52

(54) **VERFAHREN ZUR VOREINSTELLUNG VON INSBESONDERE IN EINEM HAUS-HALT VERWENDETEN GERÄTEN**

(30) Priorität: 22.03.2021 DE 102021202762; 24.06.2021 DE 102021206556
(71) Anmelder: BSH Hausgeräte GmbH, 81739 München (DE)
(72) Erfinder: Daburger, Veronika, 83313 Siegsdorf (DE)

(57) **Zusammenfassung**

Die vorliegende Erfindung betrifft ein Verfahren zur Voreinstellung von insbesondere in einem Haushalt eingesetzten Geräten, bei dem ein Nutzer oder eine Nutzerin ein Gerät mit voreingestellten Parametern verwendet und eine Zufriedenheit des Nutzers oder der Nutzerin mit der Verwendung des Geräts abgefragt wird.

Die Antworten des Nutzers oder der Nutzerin werden dann an eine zentrale Recheneinrichtung übermittelt, die diese auswertet, hieraus Präferenzparameter für die Verwendung des Geräts ermittelt und die Präferenzparameter zur Voreinstellung zukünftiger Geräte nutzt.

Hierdurch kann eine breite Kundenzufriedenheit, insbesondere auch unter Berücksichtigung länderspezifischer Besonderheiten, erreicht werden.

## Beschreibung

Die vorliegende Erfindung betrifft ein Verfahren zur Voreinstellung von insbesondere in einem Haushalt verwendeten Geräten.

Aus der EP 2 392 239 A1 ist ein Verfahren zur Konfiguration eines wenigstens eine oder mehrere Baugruppen aufweisenden Kaffeevollautomaten mit folgenden Schritten bekannt: Manuelles Auswählen von einem oder mehreren Geschmacksparametern eines Kaffeegetränks an einer Eingabeeinheit, wobei die auswählbaren Geschmacksparameter wenigstens einen oder mehrere der folgenden Parameter umfassen: Säure, Bitterkeit, Salzigkeit, Fülle und/oder Abgang des Kaffeegetränks. Anschließend erfolgt ein Auswerten des Datensignals durch eine Steuereinheit anhand von vorgegebenen Datensätzen und Ansteuerung von zumindest einer Baugruppe des Kaffeevollautomaten. Hierdurch soll es möglich sein, eine benutzerfreundliche Einstellung des Geschmacks eines Kaffeegetränks zu ermöglichen.

Kaffeevollautomaten finden zunehmend auch im Consumer-Bereich Verbreitung und bieten eine Reihe von Möglichkeiten von Maschineneinstellungen, die den Geschmack des ausgegebenen Kaffeegetränks beeinflussen. Solche Kaffeevollautomaten werden bislang im Werk voreingestellt und gegebenenfalls bei einer Wartung von einem Servicetechniker auf die Gegebenheiten vor Ort angepasst. Zudem kann selbstverständlich ein Nutzer bzw. eine Nutzerin unabhängig von den voreingestellten Parametern weitere individuelle Einstellungen vornehmen, wie beispielsweise eine Pulvermenge, eine Menge an auszugebendem Getränk, eine Temperatur, einen Mahlgrad, eine Intensität oder einen Milchschaumanteil. Die Parameter wird dabei der Nutzer bzw. die Nutzerin so wählen, dass ein in seinen/ihren Augen besonders wohlschmeckendes Getränk produziert werden kann.

Da sich die Parameter jedoch teilweise gegenseitig beeinflussen, ist es derzeit erforderlich, dass sich ein Nutzer bzw. eine Nutzerin entweder näher mit den Einstellmöglichkeiten auskennen muss, was ein entsprechendes Vorwissen voraussetzt, oder er/sie muss sich lange genug im sogenannten try-and-error-Verfahren an sein/ihr Wunschgetränk herantasten. Gelingt dies langfristig nicht, ist der Nutzer bzw. die Nutzerin mit dem ausgegebenen Kaffeegetränk nicht zufrieden, was besonders unvorteilhaft und nicht wünschenswert ist.

Nachteilig ist zudem, dass selbst für den Fall, dass es dem Nutzer bzw. der Nutzerin gelingen sollte, einen Getränkeautomaten bezgl. der einzelnen Parameter zu seiner/ihrer Zufriedenheit einzustellen, dies immer ein isolierter Einstellvorgang bleibt. Eine breite Kundenzufriedenheit kann damit nicht erreicht werden. Um sich einer breiten Kundenzufriedenheit zumindest anzunähern und um insbesondere die Anforderungen der Kunden an beispielsweise Kaffee- und Milchgetränke zu kennen, wird deshalb bislang zu Beginn einer Produktentwicklung eine "Getränkespezifikation" angelegt, in der die Getränke beschrieben werden. Die Grundlage hierfür ist allerdings häufig dünn, da es schwierig/aufwendig/teuer ist, die Anforderungen der Kunden, vor allem auch international, zu bestimmen und zu beschreiben. Aktuell werden hierfür teure Markforschungsstudien durchgeführt, die sich allerdings meist auf Deutschland als Zielgruppe beschränken.

Eine derartige Vorgehensweise betrifft dabei natürlich nicht nur Getränkeautomaten, sondern nahezu sämtliche in einem Haushalt verwendeten Geräte.

Die vorliegende Erfindung beschäftigt sich daher mit dem Problem, ein Verfahren anzugeben, mit dem insbesondere eine breite Kundenzufriedenheit erreichbar ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Verfahren anzugeben, mittels welchem eine Zufriedenheit eines Nutzers bzw. einer Nutzerin mit der Verwendung eines Geräts in einem Haushalt an einer Vielzahl einzelner dezentraler Geräte dezentral abgefragt und an eine zentrale Recheneinrichtung zur Verarbeitung und Auswertung übertragen wird. Die zentrale Recheneinrichtung wertet dann die übermittelten Antworten auf die Zufriedenheitsabfragen aus und ermittelt hieraus Präferenzparameter für das jeweilige Gerät, die dann wiederum zur Voreinstellung zukünftiger weiterer Geräte genutzt werden. Mittels einer ganzen Masse an dezentral abgefragten Informationen, lassen sich somit die Parameter zukünftiger Geräte voreinstellen, wodurch eine Vielzahl an Meinungen berücksichtigt und zum Wohle des Kunden zur Voreinstellung genutzt werden kann. Durch die Auswertung einer Vielzahl an unterschiedlichen Antworten auf Zufriedenheitsabfragen können spezifische Präferenzparameter in der Art eines Mehrheitsempfindens gewonnen und zur Voreinstellung zukünftiger Geräte genutzt werden, wodurch eine deutlich breitere Kundenzufriedenheit erreichbar ist. Dabei ist selbstverständlich klar, dass je mehr Antworten auf die Zufriedenheitsabfragen ausgewertet und zur Ermittlung der Präferenzparameter verwendet werden, umso valider sind die gewonnenen Ergebnisse.

Bei einer vorteilhaften Ausführungsform des erfindungsgemäßen Verfahrens werden Standortdaten der dezentralen und insbesondere vernetzten Geräte an die zentrale Recheneinrichtung übermittelt und bei der Ermittlung der Präferenzparameter berücksichtigt. Hierdurch lassen sich insbesondere länderspezifische Kundenanforderungen bezüglich der Verwendung der Geräte ohne nennenswerte Mehrkosten aus den Daten der Zufriedenheitsabfrage gewinnen. Aktuell gibt es diese Daten für andere Länder außerhalb Deutschlands nur in geringem Umfang, was im ungünstigsten Fall dazu führt, dass die Kunden in den anderen Ländern mit diese nicht zufriedenstellenden Geräten versorgt werden.

Bei einer weiteren vorteilhaften Ausführungsform des erfindungsgemäßen Verfahrens erfolgt die Ermittlung der Präferenzparameter durch unüberwachtes Lernen oder künstliche Intelligenz. Die Recheneinrichtung kann einen Algorithmus aus dem Bereich des unüberwachten Lernens (unsupervised learning) verwenden, der Muster in den Datensätzen erkennen kann. Dieser kann z.B. Erkennen und Clustern, welche Kundengruppen es gibt und welche Geräteeigenschaften diese jeweils bevorzugen. Hierdurch lassen sich wertvollen Kundeninformationen gewinnen, die zur stetigen Verbesserung der Kundenzufriedenheit nutzbar sind. Unüberwachtes Lernen ist ein maschinelles Lernen ohne im Voraus bekannte Zielwerte sowie ohne Belohnung durch die Umwelt. Die zentrale Recheneinrichtung versucht in diesem Fall, in den von den Nutzern bei der Zufriedenheitsabfrage eingegeben Antworten Muster zu erkennen, die vom strukturlosen Rauschen abweichen.

Zweckmäßig ermittelt die zentrale Recheneinrichtung Nutzergruppen sowie zugehörige Parameter bzw. Zufriedenheiten mit den jeweils verwendeten Geräten und berücksichtigt dies bei der Ermittlung der Präferenzparameter. Hierdurch lassen sich länderspezifische und/oder nutzerspezifische Geschmäcker identifizieren und die zukünftigen Geräte entsprechend voreinstellen.

Bei einer weiteren vorteilhaften Ausführungsform des erfindungsgemäßen Verfahrens verwendet die Recheneinrichtung einen Algorithmus zur Anomalie-Erkennung. Das Erkennen von Anomalien oder Ausreißern mittels eines geeigneten Algorithmus bedeutet, Muster in Daten zu entdecken, die nicht erwartet werden und nicht in einen definierten normalen Zustand eingeordnet werden können. Dabei sind unterschiedliche Modelle verfügbar, wobei zu einer zuverlässigen Validierung der gewonnenen Ergebnisse verschiedene Modelle angewandt und mittels gleicher Eingabedaten verglichen werden sollten. Mittels eines solchen Algorithmus können bestimmte Randbedingungen erkannt werden, die zu negativen Antworten in der Zufriedenheitsabfrage führen, da dies auf einen Fehlerfall hindeuten kann. Wobei hier als Fehlerfall bezeichnet wird, dass eine Verwendung des Geräts unter bestimmten Umständen nicht anforderungsgerecht erfolgen kann.

Bei einer vorteilhaften Weiterbildung der erfindungsgemäßen Lösung erfolgt die Zufriedenheitsabfrage über ein Display des jeweiligen Geräts, über welches der Nutzer oder die Nutzerin seine/ihre Antwort eingeben kann. Dies stellt die einfachste Möglichkeit zur Durchführung des erfindungsgemäßen Verfahrens dar, wobei rein theoretisch selbstverständlich auch eine akustische Wiedergabe, beispielsweise ein Vorlesen der Frage, denkbar ist. Durch das als Touchpad bzw. Touchscreen ausgebildete Display ist es möglich, dieses noch für weitere Anzeigezwecke zu verwenden, wobei selbstverständlich alternativ rein theoretisch auch Tasten zur Eingabe der Antworten denkbar sind. Sofern das Gerät keine Ausgabe-/Eingabemöglichkeit, das heißt beispielsweise kein Display, besitzt, sind die Abfrage der Eigenschaft und die Eingabe der Antwort auch über eine App möglich.

Zweckmäßig kann der Nutzer bzw. die Nutzerin unter fünf Antwortmöglichkeiten auswählen: minus-minus, minus, neutral/ideal, plus, plus-plus. Die vorgenannten fünf Antwortmöglichkeiten können selbstverständlich auch in Form von unterschiedlichen Balkenanzeigen angezeigt werden, so dass beispielsweise bei einem viel zu heiß ausgegebenen Getränk/Kaffeegetränk und der Frage nach der Zufriedenheit mit der Temperatur des ausgegebenen Getränks/Kaffeegetränks der Nutzer bzw. die Nutzerin die "minus-minus"-Taste bzw. das zugehörige Feld drücken kann, um die Temperatur zukünftig ausgegebener Kaffeegetränke deutlich zu senken. Diese fünf Antwortmöglichkeiten können selbstverständlich auch noch weiter verfeinert werden, beispielsweise analog zu einer helldunkel-Anzeige bei einem Kopierer. Hierdurch ist es einem Nutzer bzw. einer Nutzerin möglich, die jeweils abgefragten Eigenschaften individuell und äußerst feinstufig zu beeinflussen. Durch eine derartig feinstufige Abfrage lassen sich beispielswiese länderspezifische oder nutzergruppenspezifische Besonderheiten leicht abfragen und bei der Voreinstellung zukünftiger Geräte, insbesondere Getränkeautomaten, berücksichtigen. Wird dabei beispielsweise erkannt, dass eine bestimmte Nutzergruppe ihr Heißgetränk mit einer bestimmten Temperatur als zufriedenstellend einstuft, so können zukünftige Getränkeautomaten, die an diese Nutzergruppe verkauft werden, auf diese bestimmte Heißgetränkeausgabetemperatur voreingestellt und damit eine breite Kundenzufriedenheit erreicht werden.

Mit dem erfindungsgemäßen Verfahren ist es kostengünstig möglich, eine Kundenzufriedenheit mit einem Gerät anhand einer Vielzahl einzelner dezentraler Geräte dezentral abzufragen, hierauf gegebene Antworten an eine zentrale Recheneinrichtung zur Verarbeitung und Auswertung zu übertragen, dort aus diesen Antworten Präferenzparameter für das jeweilige Gerät zu ermitteln, die dann wiederum zur Voreinstellung zukünftiger weiterer Geräte genutzt werden. Mittels einer ganzen Masse so dezentral abgefragter Informationen, lassen sich somit die Parameter zukünftiger Geräte voreinstellen, wodurch eine deutlich breitere Kundenzufriedenheit erreichbar ist.

Bei einer vorteilhaften Weiterbildung des erfindungsgemäßen Verfahrens wird als Gerät ein Getränkeautomat, insbesondere ein Kaffeevollautomat, verwendet, der unterschiedliche Kaffeegetränke und/oder Milchgetränke ausgibt. Dabei werden eine Kundenzufriedenheit zu einem Getränk an einer Vielzahl einzelner dezentraler Getränkeautomaten dezentral abgefragt und die Antworten hierauf an eine zentrale Recheneinrichtung zur Verarbeitung und Auswertung übertragen. Die zentrale Recheneinrichtung wertet dann die übermittelten Antworten auf die Kundenzufriedenheitsabfragen aus und ermittelt hieraus Präferenzparameter für das jeweilige Getränk, die dann wiederum zur Voreinstellung zukünftiger weiterer Getränkeautomaten genutzt werden. Mittels einer ganzen Masse an dezentral abgefragten Informationen, lassen sich somit die Parameter zukünftiger Getränkeautomaten voreinstellen, wodurch eine Vielzahl an "Geschmacksmeinungen" berücksichtigt und zum Wohle des Kunden zur Voreinstellung genutzt werden kann.

Durch die Auswertung einer Vielzahl an unterschiedlichen Zufriedenheitsabfragen können spezifische Präferenzparameter in der Art eines Mehrheitsgeschmacks gewonnen und zur Voreinstellung zukünftiger Getränkeautomaten genutzt werden, wodurch eine deutlich breitere Kundenzufriedenheit erreichbar ist.

Bei dem erfindungsgemäßen Verfahren zur zentralen Konfiguration von vernetzten dezentralen Getränkeautomaten, wird somit zunächst ein gewünschtes Getränk durch einen Nutzer oder eine Nutzerin unter Verwendung von für dieses Getränk voreingestellten Parameter an einem dezentralen Getränkeautomaten bezogen und anschließend die Zufriedenheit des Nutzers oder der Nutzerin mit dem ausgegebenen Getränk abgefragt. Das Verfahren führt dabei eine Zufriedenheitsanalyse durch und stellt bei einem nicht zufriedenen Nutzer bzw. einer nicht zufriedenen Nutzerin diesem/dieser eine einfach verständliche Frage, die einfach beantwortet werden kann. Die Eingabe der Antworten durch den Nutzer bzw. die Nutzerin und ein Einstellen der Parameter kann dabei ohne jegliche Vorkenntnis erfolgen. Anhand dieser einfachen Antworten wiederum kann eine Rechnereinrichtung im dezentralen Getränkeautomaten eine Konfiguration des dezentralen Getränkeautomaten, insbesondere des Kaffeevollautomaten, beispielsweise ein Einstellen eines Geschmacksprofils o.ä., insbesondere eines Volumens, eines Temperaturprofils, Brühpausen, Pulververpresskraft, Mahlgrad, Dampfbeschaffenheit, einer Ausgabemenge, etc. übernehmen. Die voreingestellten Parameter können dabei bereits werksseitig voreingestellt sein. Die Zufriedenheitsabfrage kann beispielsweise über ein Display erfolgen, welches sowohl zur Ausgabe einer Frage als auch zur Eingabe einer Antwort, insbesondere in der Art eines Touchpads, ausgebildet sein kann. Beantwortet nun die Nutzerin bzw. der Nutzer diese Frage mit JA, das heißt sie/er ist mit dem ausgegebenen Getränk, insbesondere dem Kaffeegetränk, zufrieden, werden die voreingestellten Parameter auch weiter für die Herstellung nachfolgender gleichartiger Getränke, insbesondere Kaffeegetränke, verwendet. Wird diese Frage jedoch mit NEIN beantwortet, wird zumindest eine Eigenschaft abgefragt, wobei eine von dem Nutzer oder der Nutzerin eingegebene Antwort auf die zumindest eine abgefragte Eigenschaft anschließend für die Anpassung der Parameter in Richtung der seitens des Nutzers oder der Nutzerin gewünschten Eigenschaft für die Zubereitung weiterer Getränke derselben Art verwendet und abgespeichert werden kann. Der Nutzer bzw. die Nutzerin wird in einem sich wiederholenden Prozess vorzugsweise solange befragt, bis er/sie die Zufriedenheitsabfrage mit JA beantwortet. Die Parameter, die beim entsprechenden Getränk mit den gewünschten und abgefragten Eigenschaften einhergehen, werden danach verwendet. Hierdurch ist es somit möglich, dass sich ein Nutzer bzw. eine Nutzerin, der/die den Getränkeautomaten, insbesondere den Kaffeevollautomaten, nutzt, überhaupt nicht mit technischen Parametern wie Mahlgrad, Volumen in Millilitern, Pulvermenge, etc. sowie deren Wechselwirkungen untereinander auseinandersetzen bzw. auskennen muss. Die Einstellung des Getränkeautomaten, insbesondere des Kaffeevollautomaten, kann somit ausschließlich über jedermann leicht verständliche Fragen erfolgen, aus deren Beantwortung der Getränkeautomat, insbesondere der Kaffeevollautomat, mittels einer dezentralen Rechnereinrichtung ermittelt bzw. lernt, wie das auszugebende Getränk, insbesondere Kaffeegetränk, in der Zukunft zubereitet werden soll. Um nun jedoch beispielsweise länderspezifische Besonderheiten berücksichtigen zu können, sind die Getränkeautomaten vernetzt und mit einer zentralen Recheneinrichtung kommunizierend verbunden. Die eingegebenen Antworten sowie die ggf. als Reaktion auf die eingegebenen Antworten geänderten Parameter werden so an die zentrale Recheneinrichtung übermittelt, die daraufhin die von den dezentralen Getränkeautomaten an die zentrale Recheneinrichtung übermittelten Antworten auswertet und hieraus Präferenzparameter für Getränke ermittelt, welche dann zur Voreinstellung zukünftiger weiterer Getränkeautomaten genutzt werden. Hierdurch lässt sich somit eine sehr breite oder beispielswiese auch lokal begrenzte und lokalspezifische Besonderheiten berücksichtigende Zufriedenheitsabfrage vergleichsweise kostengünstig durchführen und zur Voreinstellung nachfolgender Getränkeautomaten nutzen, wodurch nachfolgende Nutzer eher mit den ausgegebenen Getränken zufrieden sind und so eine breitere Kundenzufriedenheit erreicht werden kann.

Hierdurch kann eine direkte und große Komfortsteigerung für den Nutzer bzw. die Nutzerin am jeweiligen Getränkeautomaten erreicht werden, da die auszugebenden Getränke, insbesondere Kaffeegetränke, einerseits im Hintergrund und insbesondere ohne technische Vorkenntnisse des Kunden bzw. der Kundin an die (Geschmacks-)Bedürfnisse desselben/derselben angepasst werden, wobei die Anpassung zudem intuitiv und äußerst benutzerfreundlich erfolgt. Die im gleichen Zuge gewonnenen Zufriedenheitsergebnisse können andererseits zur verbesserten Voreinstellung zukünftiger Getränkeautomaten verwendet werden, wodurch sich eine zunehmende breite Kundenzufriedenheit einstellt. Bisher konnte man nur indirekt Rückschlüsse ziehen, aus z.B. den Einstellungen, die der Kunde am Getränkeautomat vornimmt bzw. aus den Verteilungen der Getränketypen. Diese waren aber naturgemäß nur Mutmaßungen. Durch die erstmals mögliche Auswertung einer Vielzahl an unterschiedlichen Zufriedenheitsabfragen kann ein Mehrheitsgeschmack ermittelt und auf einzelne Getränkeautomaten übertragen werden, wodurch eine deutlich breitere Kundenzufriedenheit erreichbar ist.

Bei einer vorteilhaften Ausführungsform des erfindungsgemäßen Verfahrens werden Standortdaten der dezentralen vernetzten Getränkeautomaten an die zentrale Recheneinrichtung übermittelt und bei der Ermittlung der Präferenzparameter berücksichtigt. Hierdurch lassen sich insbesondere länderspezifische Kundenanforderungen an die Getränke ohne nennenswerte Mehrkosten aus den Daten der Zufriedenheitsabfrage gewinnen. Aktuell gibt es diese Daten für andere Länder außerhalb Deutschlands nur in geringem Umfang, was im schlimmsten Fall dazu führt, dass die Kunden in den anderen Ländern nicht mit zufriedenstellenden Getränken versorgt werden. Für Deutschland ist zwar eine Getränkespezifikation festgelegt, allerdings kann man auch hier aktuell nur mittels Social Media Auswertungen, Marktforschung oder gezielten Kundenbefragungen ermitteln, ob diese Getränkespezifikation auch wirklich die Anforderungen des Kunden wiedergibt. Mit dem erfindungsgemäßen Verfahren ist eine permanente Anpassung an insbesondere auch lokale oder länderspezifische Geschmäcker möglich, wodurch eine deutlich verbreiterte Kundenzufriedenheit erreichbar ist.

Zweckmäßig ist die zumindest eine abzufragende Eigenschaft eine Temperatur, eine Ausgabemenge, eine Intensität, eine Säure, eine Bitterkeit, eine Milchschaumkonsistenz, eine Milchschaummenge, ein Kaffee-Milch-Verhältnis oder ein Geschmack des bezogenen Getränks/Kaffeegetränks, ein Geschmacksprofil o.ä., insbesondere ein Volumen, ein Temperaturprofil, Brühpausen, Pulververpresskraft, Mahlgrad, Dampfbeschaffenheit, einer Ausgabemenge. Jede dieser rein exemplarisch aufgezählten und abzufragenden Eigenschaften kann dabei ähnlich einer Verästelung weiter aufgeschlüsselt bzw. weiter spezifiziert werden, so dass beispielsweise bei Eingabe einer zu geringen Temperatur im Folgenden nachgefragt werden kann, um wieviel Grad die Temperatur des auszugebenden Getränks/Kaffeegetränks zukünftig gesteigert werden soll, wobei selbstverständlich auch denkbar ist, dass der Nutzer bzw. die Nutzerin nicht die Differenz in Grad angibt, sondern "nur" viel kälter, kälter, genau richtig, wärmer oder viel wärmer. Den Rest erledigt der Getränkeautomat selbst und lernt aus den Antworten den Geschmack des Nutzers bzw. der Nutzerin kennen, der zudem die eingegebenen Antworten an die zentrale Recheneinrichtung übermittelt, sodass diese dort zur Ermittlung von Präferenzparametern für die Voreinstellung zukünftiger Getränkeautomaten genutzt werden können.

Bei einer vorteilhaften Weiterbildung des erfindungsgemäßen Verfahrens können auf die folgende Zufriedenheitsabfrage; Sind sie mit einer Ausgabemenge des bezogenen Getränks/Kaffeegetränks zufrieden? folgende Antwortmöglichkeiten gegeben werden: Es sollte viel weniger sein oder es sollte weniger sein oder genau/richtig oder es sollte mehr sein oder es sollte viel mehr sein. Ist somit die Ausgabemenge des bezogenen Getränks bzw. Kaffeegetränks viel zu niedrig, kann der Nutzer bzw. die Nutzerin vergleichsweise einfach folgende Antwort wählen: Es sollte viel mehr sein. Hierdurch wird die Ausgabemenge zukünftig hergestellter gleichartiger Getränke bzw. Kaffeegetränke gesteigert. Natürlich stellt eine derartige Frage lediglich eine erste Ebene dar, wobei in nachfolgenden Unterebenen vorstellbar ist, dass der Kunde bzw. die Kundin beim Anwählen der "es sollte viel mehr sein"-Antwort nachfolgend gefragt wird, um wieviel Prozent die Menge des ausgegebenen Getränks bzw. Kaffeegetränks erhöht werden soll. Eine derartige Mengenangabe kann dabei alternativ auch in Millilitern erfolgen. Durch eine derartige Abfrage lassen sich länderspezifische oder nutzergruppenspezifische Besonderheiten hinsichtlich der als angenehm empfundenen Getränkemenge leicht abfragen und bei der Voreinstellung zukünftiger Getränkeautomaten berücksichtigen. Wird dabei beispielsweise erkannt, dass eine bestimmte Nutzergruppe eine bestimmte Menge als zufriedenstellend ansieht, so können zukünftige Getränkeautomaten, die an diese Nutzergruppe geliefert werden auf diese bestimmte Ausgabemenge voreingestellt und damit eine breite Kundenzufriedenheit erreicht werden.

Bei einer weiteren vorteilhaften Ausführungsform des erfindungsgemäßen Verfahrens können auf folgende Zufriedenheitsabfrage; sind Sie mit einer Temperatur des bezogenen Getränks bzw. Kaffeegetränks zufrieden? folgende Antwortmöglichkeiten gegeben werden: Es sollte viel kühler sein oder es sollte kühler sein oder genau/richtig oder es sollte wärmer sein oder es sollte viel wärmer sein. Auch hierdurch ist es intuitiv und vergleichsweise einfach einem Benutzer bzw. eine Benutzerin möglich, die Temperatur des auszugebenden Getränks bzw. Kaffeegetränks, beispielsweise eines Espressos, einzustellen. Durch die derzeit aufgeführten fünf Auswahlmöglichkeiten können auch größere Temperatursprünge hin zu einem zukünftig wärmeren oder kälteren Getränk bzw. Kaffeegetränk bewirkt werden.

Zweckmäßig können folgende Antwortmöglichkeiten auf die folgende Zufriedenheitsabfrage: Sind Sie mit einer Intensität des bezogenen Getränks bzw. Kaffeegetränks zufrieden, gegeben werden: Es sollte viel milder sein, es sollte milder sein, genau richtig, es sollte intensiver sein, oder es sollte viel intensiver sein. Auch hierüber ist eine vergleichsweise einfache Eingabe eines gewünschten Geschmacks durch den Nutzer bzw. die Nutzerin möglich, wobei in einer hinterlegten Software bzw. durch Ausführen des Verfahrens entsprechende zugehörige Parameter, wie beispielsweise ein Mahlgrad, Mahlmenge, temperatur- und Flussverlauf des Heißwassers entsprechend beeinflusst werden. Wird beispielsweise die Intensität durch den Nutzer bzw. die Nutzerin als viel zu milde bewertet, kann das erfindungsgemäße Verfahren beispielsweise einen Mahlgrad erhöhen und/oder eine Menge an je Brühvorgang verwendetem Kaffeemehl. Umgekehrt ist es auch denkbar, dass es bei einem für den Nutzer bzw. die Nutzerin als zu intensiv schmeckenden Kaffeegetränk und der Eingabe, ein Mahlgrad und/oder eine Pulvermenge reduziert werden.

Selbstverständlich können über das erfindungsgemäße Verfahren hinsichtlich ihrer Wechselwirkung äußerst komplexe Einstellvorgänge vergleichsweise einfach durch einen Nutzer bzw. eine Nutzerin eingestellt werden, da diesem bzw. dieser nur einfach verständliche Fragen präsentiert werden, deren Beantwortung die eigentlichen komplexen Einstellvorgänge auslöst, diese jedoch nicht vom Nutzer bzw. der Nutzerin selbst durchgeführt oder durchschaut werden müssen.

Rein theoretisch ist sogar denkbar, dass bei dem erfindungsgemäßen Verfahren dem Nutzer bzw. der Nutzerin Vorschläge für weitergehende Anpassungen gemacht werden, wie beispielsweise der Vorschlag bestimmter Espressobohnen, Röststufen, Kaffeesorten, Milcharten, etc.. Weiter ist selbstverständlich auch denkbar, dass das Verfahren auf einem Smartphone der Nutzerin bzw. des Nutzers läuft, insbesondere sofern das Smartphone beispielsweise über eine Connect-Funktion verfügt und via App mit dem Kaffeevollautomaten verbunden ist. Hierdurch ist es dem Nutzer bzw. der Nutzerin möglich, individuell ein jeweiliges Getränk bzw. Kaffeegetränk zu konfigurieren bzw. an den eigenen, individuellen Geschmack anzupassen.

## Patentansprüche

1. Verfahren zur Voreinstellung von insbesondere in einem Haushalt eingesetzten Geräten, bei dem
- ein Nutzer oder eine Nutzerin ein Gerät mit voreingestellten Parametern verwendet,
- eine Zufriedenheitsabfrage des Nutzers oder der Nutzerin mit der Verwendung des Geräts durchgeführt wird,
- Antworten des Nutzers oder der Nutzerin auf die Zufriedenheitsabfrage an eine zentrale Recheneinrichtung übermittelt werden,
- die zentrale Recheneinrichtung die von zumindest zwei Geräten an die zentrale Recheneinrichtung übermittelten Antworten auswertet und hieraus Präferenzparameter für die Verwendung des Geräts ermittelt,
- die Präferenzparameter zur Voreinstellung zukünftiger Geräte genutzt werden.

2. Verfahren nach Anspruch 1
**dadurch gekennzeichnet,**
**dass** Standortdaten der durch die Nutzer oder die Nutzerinnen verwendeten Geräte an die zentrale Recheneinrichtung übermittelt und bei der Ermittlung der Präferenzparameter berücksichtigt werden.

3. Verfahren nach Anspruch 1 oder 2, **dadurch gekennzeichnet, dass** die Ermittlung der Präferenzparameter durch unüberwachtes Lernen oder künstliche Intelligenz erfolgt.

4. Verfahren nach Anspruch 3, **dadurch gekennzeichnet, dass** die zentrale Recheneinrichtung Nutzergruppen sowie zugehörige Parameter bzw. Zufriedenheiten mit der Verwendung der jeweiligen Geräte ermittelt und bei der Ermittlung der Präferenzparameter berücksichtigt.

5. Verfahren nach einem der vorhergehenden Ansprüche, **dadurch gekennzeichnet, dass** die zentrale Recheneinrichtung einen Algorithmus zur Anomalie-Erkennung verwendet.

6. Verfahren nach einem der vorhergehenden Ansprüche, **dadurch gekennzeichnet, dass** die Zufriedenheitsabfrage über ein Display des jeweiligen Geräts erfolgt.

7. Verfahren nach einem der vorhergehenden Ansprüche, **dadurch gekennzeichnet, dass** der Nutzer oder die Nutzerin unter fünf Antwortmöglichkeiten auswählen kann; minus-minus; minus; neutral/ideal, plus, plus-plus.

8. Verfahren nach einem der vorhergehenden Ansprüche, **dadurch gekennzeichnet, dass** als Gerät ein Getränkeautomat, insbesondere ein Kaffeevollautomat verwendet wird, der unterschiedliche Kaffeegetränke und/oder Milchgetränke ausgibt.

9. Verfahren nach Anspruch 8, **dadurch gekennzeichnet, dass**
- ein gewünschtes Getränk durch einen Nutzer oder eine Nutzerin unter Verwendung von für dieses Getränk voreingestellten Parameter an einem dezentralen Getränkeautomaten bezogen wird,
- eine Zufriedenheit des Nutzers oder der Nutzerin mit dem ausgegebenen Getränk abgefragt wird,
- falls diese Frage mit JA beantwortet wird, die voreingestellten Parameter weiterverwendet werden, oder
- falls diese Frage mit NEIN beantwortet wird, zumindest eine Eigenschaft abgefragt wird, wobei eine von dem Nutzer oder der Nutzerin eingegebene Antwort auf die zumindest eine abgefragte Eigenschaft anschließend für die Anpassung der voreingestellten Parameter für die Zubereitung weiterer Getränke derselben Art verwendet und abgespeichert werden kann,
- die eingegebenen Antworten sowie die ggf. als Reaktion auf die eingegebenen Antworten geänderten Parameter an eine zentrale Recheneinrichtung übermittelt werden,
- die zentrale Recheneinrichtung die von den dezentralen Getränkeautomaten an die zentrale Recheneinrichtung übermittelten Antworten auswertet und hieraus Präferenzparameter für zumindest das jeweilige Getränk ermittelt,
- die Präferenzparameter zur Voreinstellung zukünftiger Getränkeautomaten genutzt werden.

10. Verfahren nach Anspruch 9, **dadurch gekennzeichnet, dass** die zumindest eine abzufragende Eigenschaft eine Temperatur, eine Ausgabemenge, eine Intensität, eine Säure, eine Bitterkeit, eine Milchschaumkonsistenz, eine Milchschaummenge, ein Kaffee-Milch-Verhältnis oder ein Geschmack des bezogenen Getränks/Kaffeegetränks ist.

11. Verfahren nach einem der Ansprüche 9 oder 10, **dadurch gekennzeichnet, dass** auf folgende Zufriedenheitsabfrage; Sind Sie mit einer Ausgabemenge des bezogenen Getränks zufrieden? folgende Antwortmöglichkeiten gegeben werden können; Es sollte viel weniger sein; Es sollte weniger sein; Genau richtig, Es sollte mehr sein; Es sollte viel mehr sein.

12. Verfahren nach einem der Ansprüche 9 bis 11, **dadurch gekennzeichnet, dass** auf folgende Zufriedenheitsabfrage; Sind Sie mit einer Temperatur des bezogenen Getränks zufrieden? folgende Antwortmöglichkeiten gegeben werden können; Es sollte viel kühler sein; Es sollte kühler sein; Genau richtig, Es sollte wärmer sein; Es sollte viel wärmer sein.

13. Verfahren nach einem der Ansprüche 9 bis 12, **dadurch gekennzeichnet, dass** auf folgende Zufriedenheitsabfrage; Sind Sie mit einer Intensität des bezogenen Getränks zufrieden? folgende Antwortmöglichkeiten gegeben werden können; Es sollte viel milder sein; Es sollte milder sein; Genau richtig, Es sollte intensiver sein; Es sollte viel intensiver sein.
